## Europäisches Patentamt

## European Patent Office

## Office européen des brevets

(19)

(11) **EP 1 154 971 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(21) Anmeldenummer: **00905012.1**

(22) Anmeldetag: **03.02.2000**

(51) Int Cl.$^7$: **C04B 41/49**

(86) Internationale Anmeldenummer:
**PCT/EP00/00856**

(87) Internationale Veröffentlichungsnummer:
**WO 00/46167 (10.08.2000 Gazette 2000/32)**

(54) **WÄSSRIGE CREMES VON ORGANOSILICIUMVERBINDUNGEN**

AQUEOUS CREAMS OF ORGANOSILICON COMPOUNDS

CREME AQUEUSE A BASE DE COMPOSES ORGANOSILICIQUES

(84) Benannte Vertragsstaaten:
**AT BE CH CY DE DK ES FI FR GB GR IE IT LI LU MC NL PT SE**

(30) Priorität: **04.02.1999 DE 19904496**

(43) Veröffentlichungstag der Anmeldung:
**21.11.2001 Patentblatt 2001/47**

(73) Patentinhaber: **Wacker-Chemie GmbH**
**81737 München (DE)**

(72) Erfinder:
- **HAGER, Rudolf**
  **D-84503 Altötting (DE)**
- **MAYER, Hans**
  **D-84489 Burghausen (DE)**
- **KREUZPOINTNER, Marianne**
  **D-84543 Winhöring (DE)**
- **HUBER, Sandra**
  **A-5121 Tarsdorf (AT)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
WO-A-96/29154   WO-A-96/35652
DE-A- 2 751 714   DE-A- 19 628 035
GB-A- 808 193   GB-A- 962 230
US-A- 5 104 447

**Beschreibung**

Die Erfindung betrifft eine wäßrige standfeste Creme und ein Verfahren zur hydrophobierenden Imprägnierung oder Grundierung von mineralischen Baustoffen.

Siliciumorganische Verbindungen werden im Bautenschutz vor allem wegen ihrer hervorragenden Imprägnierwirkung gegen Wasser und Schmutz eingesetzt. Seit Jahren etabliert für diese Anwendung sind Siliconate, Siliconharze, monomere Silane und oligomere Siloxane. Die Wirkstoffe werden üblicherweise in niederviskosen Trägermedien, wie z. B. organischen Lösemitteln oder Wasser, gelöst oder dispergiert. Niederviskose Wirkstoffe, wie z. B. monomere Silane oder niederviskose Gemische von Silanen und Siloxanen, können auch unverdünnt auf den Baustoff aufgetragen werden.
Ein Nachteil dieser Imprägniermittel ist, daß sie an vertikalen Flächen und ganz besonders beim Arbeiten über Kopf leicht ablaufen oder abtropfen.
Mineralische Verdickungsmittel enthaltende Zusammensetzungen auf Silan-, Siloxan- oder Siliconharzbasis können dagegen auch als dickere Schicht auf die Baustoffe aufgetragen werden, ohne abzulaufen. Dabei dringt die siliciumorganische Verbindung in den Baustoff ein und das Verdickungsmittel bleibt zurück. In der US-A-4,076,868 sind z. B. mit Siliciumdioxid verdickte Lösungen von Methylpolysiloxan in Toluol beschrieben. WO 95/25706 beschreibt ein Verfahren zur Hydrophobierung mit lösemittelfreien, mit Bentoniten eingedickten Silan-/Siloxanmischungen. Nachteilig bei diesen Verfahren ist, daß das mineralische Verdickungsmittel auf dem Baustoff zurückbleibt und entfernt und entsorgt werden muß.

In EP-A-819 665 wird diesen Nachteilen entgegengewirkt, indem sogenannte Hydrophobierungscremes eingesetzt werden. Es handelt sich dabei um wäßrige, standfeste Produkte auf Basis von siliciumorganischen Verbindungen, die frei sind von Feststoffen und organischen Lösemitteln. Der Wirkstoffgehalt dieser Cremes liegt vorzugsweise bei 60 bis 95 %.

Auf saugfähigen Baustoffen, wie z. B. Ziegeln, Beton, Kalksandsteinen, Faserzementplatten Mineralputzen und vielen Natursteinen, werden im allgemeinen Imprägniermittel aufgetragen, deren Wirkstoffgehalt häufig im Bereich von 5 - 25 % liegt. Für diese Anwendungen ist die Wirkstoffkonzentration der in EP-A-819 665 beschriebenen Hydrophobierungscremes zu hoch.

Aufgabe der vorliegenden Erfindung war es, Hydrophobierungscremes bereitzustellen, deren Anwendung alle Vorteile der Hydrophobierungscremes von EP-A-819 665 beinhaltet, deren Wirkstoffgehalt aber zudem beliebig einstellbar ist.

Gegenstand der Erfindung ist eine wäßrige, standfeste Creme, welche die Komponenten

(A), welche ausgewählt werden aus
(A1) $C_1$-$C_{20}$-Alkyl-$C_2$-$C_6$-alkoxysilanen und
(A2) Alkoxygruppen enthaltendem Organopolysiloxan,
(C) Emulgator und
(D) 1 bis 95 Gew.-% organisches Lösemittel

enthält.

In einer bevorzugten Ausführungsform enthält die wäßrige Creme zusätzlich eine Aminoalkylgruppen enthaltende Komponente (B), die ausgewählt wird aus Aminoalkylgruppen enthaltendem Alkoxysilan (B1) oder Organopolysiloxan (B2), das zusätzlich zu anderen Organosiloxaneinheiten solche Siloxaneinheiten enthält, die über SiC gebundene Reste mit basischem Stickstoff aufweisen, mit der Maßgabe, daß die Aminsahl des Organopolysiloxans (B2) mindestens 0,01 beträgt.

Als Creme werden pastöse, wasserhaltige Zubereitungen bezeichnet, die Emulsionssysteme aus nicht mit Wasser mischbarer Ölphase, nämlich Wirkstoffe (A) und gegebenenfalls (B) plus organische Lösemittel (D), Wasser und Emulgatoren (C) sind. Die Creme gilt dann als standfest, wenn sie mittels Rakel, Pinsel oder durch Spritzen in einer Auftragsstärke von mindestens 0,5 mm auf vertikale saugfähige mineralische Baustoffe, wie z. B. Kalksandstein oder Tonziegel, aufgetragen wird und nach der Applikation nicht mehr als 1 cm nach unten abläuft, bevor sie vom Baustoff vollständig absorbiert worden ist.

Vorzugsweise besitzen die $C_1$-$C_{20}$-Alkyl-$C_2$-$C_6$-alkoxysilane (A1) 1 oder 2 gleiche oder verschiedene, gegebenenfalls halogen-substituierte, über SiC gebundene einwertige $C_1$-$C_{20}$-Alkylreste und die übrigen Reste sind gleiche oder verschiedene $C_2$-$C_6$-Alkoxyreste. Methoxysilane hydrolysieren zu schnell und verhindern eine ausreichende Lagerbeständigkeit.

Beispiele für die $C_1$-$C_{20}$-Alkylreste, sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest und der Heptafluorisopropylrest.

Besonders bevorzugt sind die nicht substituierten $C_1$-$C_{12}$-Alkylreste.

Beispiele für $C_2$-$C_6$-Alkoxyreste sind der Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, jedoch ist dies nicht bevorzugt.

Die wäßrige Creme kann ein Alkoxygruppen enthaltendes Organopolysiloxan (A2) oder ein Gemisch mehrerer Organopolysiloxane enthalten. Die Organopolysiloxane können zusätzlich Hydroxylgruppen enthalten, die eine Bindung an die Baustoffe erleichtern.

Die Organopolysiloxane (A2) weisen vorzugsweise eine Viskosität von höchstens 2000 mPa.s auf, um eine besonders gute Verteilung auf den Porenoberflächen im Mauerwerk zu erreichen. Es können auch höherviskose Organopolysiloxane, bis hin zu Festharzen z.B. Methylsiliconfestharze mit einem Molgewicht von 2000 bis 10000 g/mol mit beispielsweise einem Glasübergangstemperaturbereich von 40-50°C oder Festharze aus $R_3SiO_{0,5}$ - und $SiO_2$-Einheiten (MQ-Harze) mit einem bevorzugten Verhältnis $R_3SiO_{0,5}$ zu $SiO_2$ von 0,4 : 1 bis 1,2 : 1 eingesetzt werden. Diese -liegen vorzugsweise in den Silanen (A1) oder in niederviskosen Organopolysitoxanen (A2) oder im organischen Lösemittel (D) gelöst vor.

Besonders geeignet sind die Organopolysiloxane (A2) aus Einheiten der allgemeinen Formel (I)

$$R_x Si\,(OR^1)_y\,Si\,(OH)_z O_{\frac{4-x-y-z}{2}} \qquad\qquad (I),$$

in der

R   gleiche oder verschiedene einwertige, gegebenenfalls halogensubstituierte, über SiC gebundene $C_1$-$C_{20}$-Kohlenwasserstoffreste,

$R^1$   gleiche oder verschiedene einwertige $C_1$-$C_6$-Alkylreste,

x   0, 1, 2 oder 3, durchschnittlich 0,8 bis 1,8,

y   0, 1, 2 oder 3, durchschnittlich 0,01 bis 2,0 und

z   0, 1, 2 oder 3, durchschnittlich 0,0 bis 0,5 bedeuten, mit der Maßgabe, daß die Summe von x; y und z höchstens 3,5 beträgt.

Beispiele für die $C_1$-$C_{20}$-Kohlenwasserstoffreste sind die vorstehend bei den Organoalkoxysilanen (A1) aufgeführten $C_1$-$C_{20}$- Alkylreste und halogensubstituierten $C_1$- $C_{20}$-Alkylreste, die Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alphaund der β-Phenylethylrest. Besonders bevorzugt sind die nicht substituierten $C_1$-$C_{12}$-Alkylreste und der Phenylrest.

Obwohl in der vorstehend aufgeführten Formel nicht aufgeführt, kann ein Teil der Reste **R** durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n-Hexylrest, wobei die Methyl- und Ethylreste besonders bevorzugt sind.

Vorzugsweise hat **x** einen durchschnittlichen Wert von 0,9 bis 1,2. Vorzugsweise hat y einen Wert von 0,01 bis 1,2. Vorzugsweise hat **z** einen durchschnittlichen Wert von 0,0 bis 0,2.

Beispiele für Organosiloxane (A2) sind solche, die durch Umsetzung von Methyltrichlorsilan und gegebenenfalls einem $C_1$_$C_8$-Alkyltrichlorsilan und gegebenenfalls Dimethyldichlorsilan oder Phenyltrichlorsilan mit Methanol oder Ethanol in Wasser erhältlich sind, wie die Organopolysiloxane der Summenformeln

$$CH_3Si(OC_2H_5)_{0,8}O_{1,1},$$

$$C_6H_5Si(OC_2H_5)_{0,72}O_{1,14},$$

$$(CH_3)_{0,7}(\text{iso-Octyl})_{0,3}\,(OCH_3)_{0,6}SiO_{1,2},$$

$$- CH_3\,(OC_2H_5)_{0,02}SiO_{1,49}$$

oder

$$(CH_3)_{1,2}\,(OC_2H_5)_{0,02}SiO_{1,39}$$

Die gegebenenfalls zusätzlich zu Komponente (A) eingesetzten Aminoalkylgruppen enthaltenden Alkoxysilane (B1) sind vozugsweise $C_1$-$C_6$-Alkoxysilane (B1) und weisen insbesondere die allgemeine Formel (II)

$$R^2{}_uR^3{}_v Si(OR^4)_{4-u-v} \tag{II},$$

auf in der **R²**, **R³** und **R⁴** die nachstehend bei der allgemeinen Formel (III) aufgeführten Bedeutungen und

**u**    0, 1 oder 2 und
**v**    1, oder 3 sind,

mit der Maßgabe, daß die Summe aus **u** und **v** kleiner oder gleich 3 ist.
Ein Beispiel für ein bevorzugtes Alkoxysilan (B1) ist $H_2N(CH_2)_2NH(CH_2)_3$-$Si(OCH_3)_3$.
Die gegebenenfalls zusätzlich zu Komponente (A) eingesetzten Organopolysiloxane (B2) sind vorzugsweise solche aus Einheiten der allgemeinen Formel (III)

$$R^2{}_aR^3{}_b(OR^4)_c SiO_{\frac{4-a-b-c}{2}} \tag{III},$$

in der

**R²**    gleiche oder verschiedene einwertige, von basischem Stickstoff freie, gegebenenfalls halogensubstituierte, SiC-gebundene $C_1$-$C_{20}$-Kohlenwasserstoffreste bedeutet,
**R³**    gleiche oder verschiedene einwertige, gegebenenfalls halogensubstituierte, SiC-gebundene basischen Stickstoff aufweisende $C_1$-$C_{30}$-Kohlenwasserstoffreste bedeutet,
**R⁴**    gleich oder verschieden sein kann und Wasserstoffatom oder $C_1$-$C_6$-Alkylreste,
**a**    0, 1, 2 oder 3,
**b**    0, 1, 2 oder 3, durchschnittlich mindestens 0,05 und
**c**    0, 1, 2 oder 3 bedeuten,

mit der Maßgabe, daß die Summe aus **a, b** und **c** kleiner oder gleich 3 ist und daß die Aminzahl des Organopolysiloxans (B2) mindestens 0,01 beträgt.
Die Aminzahl bezeichnet die Anzahl der ml 1-n-HCl, die zum Neutralisieren von 1 g Organopolysiloxan (B2) erforderlich sind. Die Aminzahl des Organopolysiloxans (B2) beträgt vorzugsweise mindestens 0,1, insbesondere mindestens 0,2, und vorzugsweise höchstens 8, insbesondere höchstens 4.
Beispiele und bevorzugte Beispiele für den Rest **R²** sind vorstehend bei Rest **R** aufgeführt. Insbesondere sind der Methylund der Isooctylrest bevorzugt.
Vorzugsweise ist an jedes Siliciumatom, an das ein Wasserstoffatom gebunden ist, auch ein Kohlenwasserstoffrest, insbesondere ein Methylrest, gebunden.
Bevorzugt handelt es sich bei Rest **R³** um einen Rest der allgemeinen Formel (IV)

$$R^5{}_2NR^6\text{-} \tag{IV},$$

worin

**R⁵** gleich oder verschieden sein kann und Wasserstoff oder einwertigen, gegebenenfalls substituierten $C_1$-$C_{10}$-Kohlenwasserstoffrest oder $C_1$-$C_{10}$-Aminokohlenwasserstoffrest und

**R⁶** einen zweiwertigen $C_1$-$C_{15}$-Kohlenwasserstoffrest bedeuten.

Beispiele für den Rest **R⁵** sind die'für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (IV) mindestens ein Wasserstoffatom gebunden.

Bevorzugt handelt es sich bei Rest **R⁶** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest **R⁶** sind der Methylen-, Ethylen-, Propylen-, Butylen-, Cyclohexylen-, Octadecylen-, Phenylen- und Butenylenrest.

Bevorzugte Beispiele für Reste **R³** sind

$$H_2N(CH_2)_3\text{-,}$$

$$H_2N(CH_2)_2NH(CH_2)_2\text{-}$$

$$H_2N(CH_2)_2NH(CH_2)_3\text{-,}$$

$$H_2N(CH_2)_2\text{-,}$$

$$H_3CNH(CH_2)_3\text{-,}$$

$$C_2H_5NH(CH_2)_3\text{-,}$$

$$H_3CNH(CH_2)_2\text{-,}$$

$$C_2H_5NH(CH_2)_2\text{-,}$$

$$H_2N(CH_2)_4\text{-,}$$

$$H_2N(CH_2)_5\text{-,}$$

$$H(NHCH_2CH_2)_3\text{-,}$$

$$C_4H_9NH(CH_2)_2NH(CH_2)_2\text{-,}$$

$$\text{cyclo-}C_6H_{11}NH(CH_2)_3\text{-,}$$

$$\text{cyclo-}C_6H_{11}NH(CH_2)_2\text{-,}$$

$$(CH_3)_2N(CH_2)_3\text{-},$$

$$(CH_3)_2N(CH_2)_2\text{-},$$

$$(C_2H_5)_2N(CH_2)_3\text{-}$$

und

$$(C_2H_5)_2N(CH_2)_2\text{-}.$$

Die Beispiele für Alkylreste $R^1$ gelten im vollen Umfang auch für den Rest $R^6$.

Beispiele und bevorzugte Beispiele für den Rest $R^4$ sind vorstehend bei Rest $R^1$ aufgeführt. Insbesondere sind der Methyl- und der Ethylrest bevorzugt.

Der bevorzugte durchschnittliche Wert für **a** ist 0 bis 2, insbesondere 0 bis 1,8.

Der bevorzugte durchschnittliche Wert für **b** ist 0,1 bis 0,6, insbesondere 0,15 bis 0,30.

Der bevorzugte durchschnittliche Wert für **c** ist 0 bis 0,8, insbesondere 0,01 bis 0,6.

Vorzugsweise haben die Organopolysiloxane (B2) eine Viskosität von 5 bis 5000, insbesondere von 100 bis 3000 mPa.s bei 25°C.

Organopolysiloxane (B2) können in bekannter Weise, beispielsweise durch Äquilibrieren bzw. Kondensieren von aminofunktionellen Silanen mit Organopolysiloxanen, die Alkoxygruppen und/oder Hydroxylgruppen enthalten und die frei von basischem Stickstoff sind, hergestellt werden.

Die wässrigen Cremes enthalten einen an sich bekannten Emulgator (C).

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid (PO) einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder-Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*\text{-O-Z}_o$, worin $R^*$ einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-) glycin oder N-Alkyl-2-aminopropionsäuresalze.

18. Betaine, wie N- (3-Acylamidopropyl) -N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und der unter 5. aufgeführte Polyvinylalkohol. Besonders bevorzugte Polyvinylalkohole enthalten noch 5 bis 20 %, insbesondere 10 bis 15 % Vinylacetateinheiten und weisen vorzugsweise einen Polymerisationsgrad von 500 bis 3000, insbesondere von 1200 bis 2000 auf.

Zur Einstellung eines beliebigen Wirkstoffgehalts enthalten die wäßrigen Cremes als Komponente (D) nicht mit Wasser mischbares organisches Lösemittel, welches vozugsweise bei 20°C eine Löslichkeit von höchstens bei kleiner als 1 Gew.-% in Wasser besitzt und vorzugsweise einen Siedepunkt von 60 bis 280°C aufweist. Geeignete organische Lösemittel (D) sind beispielsweise Alkane mit Siedepunkten vorzugsweise im Bereich von 60 bis 280 °C, besonders bevorzugt 90 bis 220 °C, aromatische Kohlenwasserstoffe, wie Toluol, Xylole, Trimethylbenzole und Tetramethylbenzole, Chlorkohlenwasserstoffe, wie Trichlorethylen oder 1,1,1-Trichlorpropan, Ketone, Ester, wie n- oder tert. -Butylacetat, längerkettige Alkohole, wie Hexanole, Heptanole oder Oktanole, und längerkettige Ether, wie Di-n-Octylether. Besonders bevorzugt sind aufgrund ihres geringen Geruchs Alkane, entaromatisierte Benzinkohlenwasserstoffe und Isoparaffine mit Siedepunkten im Bereich von 100 bis 220 °C.

Die in EP-A-819 665 beschriebenen Hydrophobierungscremes haben auch den Nachteil, daß gerade bei sehr saugfähigen und wenig alkalischen Baustoffen, wie z. B. Tonziegeln, unmittelbar an der Baustoffoberfläche eine schlechte Hydrophobie entsteht.

Die erfindungsgemäßen wäßrigen Cremes können als Zusatz hydrophobierte hochdisperse Kieselsäuren (E) enthalten, welche die Hydrophobierung der Oberflächen, auch von saugfähigen und wenig alkalischen Oberflächen weiter verbessern. Die Kieselsäuren (E) reichern sich nämlich an der Oberfläche des Baustoffs an. Auf diese Weise wird schon sehr rasch nach der Imprägnierung eine beachtliche Wasserabweisung erhalten. Geeignete Kieselsäuren (E) sind beispielsweise erhältlich, wenn man durch Flammhydrolyse oder Fällung erhaltene Kieselsäure mit siliciumorganischen Verbindungen, insbesondere Silanen, - hydrophobiert. Die Kieselsäuren (E) haben vorzugsweise eine spezifische Oberfläche von mindestens 40 $m^2$/g, besonders bevorzugt mindestens 60 $m^2$/g.

In die aus EP-A-819 665 bekannten Hydrophobierungscremes können keine hydrophoben Feststoffe einemulgiert werden, da die cremige Konsistenz dadurch zerstört wird.

Die Gesamtmenge der Wirkstoffkomponenten (A) und (B) in den wäßrigen Cremes beträgt vorzugsweise 1 bis 80 Gew.-%, insbesondere 2 bis 70 Gew.-%.

Der Anteil der Komponente (B) in den wäßrigen Cremes beträgt vorzugsweise 0,1 bis 20 Gew.-%, insbesondere 0,2 bis 10 Gew.-%.

Der Anteil des Emulgators (C) in den wäßrigen Cremes beträgt vorzugsweise 0,1 bis 10 Gew.-%, insbesondere 0,2 bis 5 Gew.-%.

Der Gehalt an organischem Lösemittel (D) in den wäßrigen Creme beträgt 1 bis 95 Gew.-%, insbesondere 5 bis 80 Gew.-%.

Der Gehalt an Kieselsäuren (E) in den wäßrigen Cremes beträgt vorzugsweise 0,01 bis 4 Gew.-%, insbesondere 0,01 bis 2 Gew.-%.

Die wäßrigen. Cremes können noch Puffersubstanzen enthalten, die den pH-Wert im Bereich von 5 bis 8 stabilisieren, in dem die Alkyltrialkoxysilane sehr hydrolysebestandig sind. Geeignet sind alle organischen und anorganischen Säuren und Basen, die sich gegenüber den übrigen Bestandteilen, der Emulsionen chemisch inert verhalten, insbesondere die Alkali-, Erdalkaliund Ammoniumsalze von carbonsäuren, Phosphor-, Kohlen- und Schwefelsäure. Besonders bevorzugt sind Natriumcarbonat, Natriumhydrogencarbonat, Natriumhydrogenphosphat, und ein Gemisch aus Essigsäure und wässriger Ammoniaklösung. Die Menge an Puffersubstanzen beträgt vorzugsweise höchstens 3, insbesondere 1 Gew.-% der Gesamtmenge der Cremes.

Die wäßrigen Cremes können noch Zusätze zur Verbesserung des Abperleffektes enthalten, beispielsweise Metallseifen, wie Stearate oder Oleate.

Die wäßrigen Cremes können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere 0,5 Gew.-% der Gesamtmenge der Cremes.

Die wässrigen Cremes werden nach üblichen Verfahren zur Herstellung von wässrigen Cremes hergestellt.

Dazu kann entweder nach einem in EP-A-819 665 beschriebenen Verfahren zunächst eine Creme aus den Komponenten (A), (B) und (C) hergestellt werden. In diese wird dann soviel organisches Lösemittel (D) eingerührt bis der gewünschte Wirkstoffgehalt eingestellt ist.

Bei einem weiteren bevorzugten Verfahren werden die Komponenten (A), (B) und (D) vorgemischt und langsam in die wäßrige Lösung des Emulgators (C) einemulgiert bis eine cremeartige Konsistenz erreicht wird.

Ebenfalls bevorzugt ist ein Verfahren, bei dem die Komponenten (A) und (B) nur mit einem Teil der Gesamtmenge der Komponente (C) vorgemischt und bis zur einer cremeartigen Konsistenz in die Wasser/Emulgatormischung einemulgiert werden. Zum Schluß wird dann die noch verbleibende Menge Lösemittel (D) in die cremeartige Emulsion eingerührt.

Falls Festharze aus $R_3SiO_{0,5}$ - und $SiO_2$-Einheiten eingesetzt werden, werden diese vor Herstellung der erfindungsgemäßen Creme in den Silanen (A1) oder im Lösemittel (D) gelöst.

Die Herstellung der erfindungsgemäßen wäßrigen Cremes erfolgt vorzugsweise in Druckemulgiermaschinen, Kolloidmühlen oder insbesondere in einer schnelllaufenden Stator-Rotor-Rührvorrichtung nach Prof. P. Willems. Wird eine bereits vorgefertigte Creme mit weiterem Lösemittel (D) versetzt, so wird dieses bevorzugt ohne extreme Scherkraftbeaufschlagung eingerührt, um die die cremeartige Konsistenz bedingende steife Phase der Emulsion nicht zu zuerstören.

Die wäßrigen Cremes eignen sich besonders zur hydrophobierenden Imprägnierung und Grundierung von mineralischen Baustoffen, wie Natur- oder Kunststein, Beton und Stahlbeton, Porenbeton, Kalksandstein, Tonziegeln, Klinker, Marmor, Granit.

Die wäßrigen Cremes sind besonders geeignet zur Hydrophobierung von mineralisch gebundenen, vorzugsweise zementgebundenen Faserbaustoffen, deren Fasern aus Naturfasern oder Synthesefasern bestehen. Geeignete Naturfasern sind Mineralfasern, wie Steinwolle, Quarz- oder Keramikfasern oder Pflanzenfasern, wie Zellulose. Geeignete Synthesefasern sind beispielsweise Glasfasern, Kunststoffasern und Kohlefasern. Besonders bevorzugt ist die Verwendung der wäßrigen Creme zur Hydrophobierung von zementgebundenen Zellulosefaserbauteilen. Die Zellulosefasern können beispielsweise Jute-, Kokos- oder Hanffasern sein oder aus Papier; Karton oder Altpapier stammen.

Die wäßrigen Cremes werden bevorzugt durch Spritzen, Streichen, Rollen oder Spachteln auf den Baustoff aufgebracht. Die Auftragsstärke beträgt vorzugsweise 0,05 bis 3 mm, beonders bevorzugt 0,1 bis 2 mm.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Der Wirkstoffgehalt der wäßrigen Cremes bezeichnet die Summe aller siliciumorganischen Komponenten.

**Beispiele**

Als Komponente (A) werden eingesetzt:

H1: iso-Octyltriethoxysilan

H2: Organopolysiloxan der Summenformel $CH_3Si(OC_2H_5)_{0,8}O_{1,1}$ mit einem durchschnittlichen Molekulargewicht von etwa 650 g/Mol und einer Viskosität von etwa 20 mm$^2$/s.

H3: Als hochviskose Flüssigkeit vorliegendes Methylsiliconharz aus $CH_3SiO_{3/2}$-Einheiten, mit etwa 20 Mol.-% $(CH_3)_2SiO_{2/2}$-Einheiten und etwa 5 Mol.-% $C_2H_5O/SiO_{3/2}$-Einheiten und einem Molekulargewicht von etwa 5000 g/Mol.

Gegebenenfalls als Komponente (B) werden eingesetzt:

N1: Kondensationsprodukt eines in den endständigen Einheiten je eine Si-gebundene Hydroxylgruppe aufweisenden $\alpha$, $\omega$-Dihydroxymethylpolysiloxans und N-(2-Aminoethyl)-3-amino-propyltrimethoxysilan in Gegenwart von KOH mit einer Aminzahl von etwa 0,3, einer Viskosität von etwa 1500 mm$^2$/s bei 25 °C und einem Restmethoxygehalt von weniger als 5 Mol.-%, bezogen auf die anfangs im N-(2-Aminoethyl)-3-aminopropyltrimethoxysilan vorhandenen Methoxygruppen.

N2: N-(2-Aminoethyl)-3-aminopropyltrimethoxysilan

Als Komponente (C) werden eingesetzt:

E1: Umsetzungsprodukt aus Stearylamin und Ethylenoxid mit einer Alkalizahl von 48 bis 51 mg KOH/g.

E2: Isotridecylalkoholglykolether mit 10 Ethylenoxideinheiten, 80 %ig in Wasser.

Als Komponente (D) werden eingesetzt:

LM1: Testbenzin Kristallöl K30 (Deutsche Shell Chemie GmbH)

LM2: Isoparaffin ISOPAR® H (Deutsche Exxon Chemical GmbH)

Beispiel 1

Je 1,6 g Emulgator E1 und E2 werden mit 30,4 g Wasser vermischt und anschließend 34 g Komponente N1 in einer schnellaufenden Stator-Rotor-Rührvorrichtung einemulgiert. In die so erhaltene Emulsion werden dann 306 g Silan H1 sowie 26,4 g Wasser abwechselnd in 6 Portionen bis zum Erhalt einer weißen, wäßrigen Creme in einer schnellaufenden Stator-Rotor-Rührvorrichtung eingearbeitet. Anschließend wird diese Creme in 2 gleiche Portionen aufgeteilt. In die eine Portion werden ohne nennenswerten Eintrag von Scherkräften 140 g Testbenzin LM1 eingerührt ($\rightarrow$ **Creme 1**: 50 % Wirkstoff)/ in die andere 650 g LM1 ($\rightarrow$ **Creme 2**: 20 % Wirkstoff).

Beispiel 2

2 g Emulgator E2 werden mit 79,5 g Wasser, 2 g Komponente N2 und 0,5 g Essigsäure vermischt. Anschließend werden in diese Mischung in einer schnellaufenden Stator-Rotor-Rührvorrichtung 300 g Isoparaffin LM2 einemulgiert, wobei die so erhaltene Emulsion bereits erheblich eindickt. Nun werden in diese bereits steife Phase 384 g einer vorgefertigten Mischung aus 67 Gewichtsteilen Silan H1 7 Gewichtsteilen Organopolysiloxan H2 und 26 Gewichtsteilen Siliconharz H3 portionsweise einemulgiert ($\rightarrow$ **Creme 3**: 50 % Wirkstoff).

Beispiel 3

Beispiel 2 wird wiederholt mit der Abänderung, daß 600 g Isoparaffin LM2 und nur 77g der Wirkstoffmischung aus 67 Gewichtsteilen Silan H1, 7 Gewichtsteilen Organopolysiloxan H2 und 26 Gewichtsteilen Siliconharz H3 eingesetzt werden (→ **Creme 4**: 10 % Wirkstoffgehalt).

Silicon-Pasten und Creme für Vergleichsversuche

**Paste 1**: 340 g Silan H1 werden mit 280 g Lösemittel LM1 verdünnt und anschließend mit 48 g Bentonit (Bentone ® 34) und 12 g Ethanol mit Hilfe eines langsam laufenden Rührers vermischt bis eine relativ hochviskose, ockerfarbene Paste resultiert (→ **Paste 1**: 50 % Wirkstoffgehalt).

**Paste 2:** 80 g der vorgefertigten Wirkstoffmischung aus Beispiel 2 bestehend aus 67 Gewichtsteilen Silan H1 7 Gewichtsteilen Organopolysiloxan H2 und 26 Gewichtsteilen Siliconharz H3 werden mit 680 g Lösemittel LM2 verdünnt. Anschließend werden in diese Lösung 40 g einer hydrophoben (Oberfläche mit Trimethylsiloxygruppen belegt) pyrogenen Kieselsäure (spezifische Oberfläche: 130 g/m$^2$) eingerührt, wobei eine pastöse Konsistenz erhalten wird (→ **Paste 2**: 10 % Wirkstoffgehalt).

**Creme 5**: Je 1,6 g Emulgator E1 und E2 werden mit 57 g Wasser vermischt und anschließend 34 g Komponente N1 in einer schnelllaufenden Stator-Rotor-Rührvorrichtung einemulgiert. In die so erhaltene Emulsion werden dann 306 g Silan H1 sowie 26,4 g Wasser abwechselnd in 6 Portionen bis zum Erhalt einer weißen, wäßrigen Creme in einer schnelllaufenden Stator-Rotor-Rührvorrichtung eingearbeitet (→ **Creme 5**: 80 % Wirkstoffgehalt, lösemittelfrei).

Beispiel 4 (Lagerstabilität der erfindungsgemäßen Cremes)

Alle erfindungsgemäßen Cremes aus den Beispielen 1 - 3 zeigen weder nach 14 Tagen Lagerung bei 50 °C noch nach 6 Monaten bei Raumtemperatur eine optische Veränderung. Sie sind also lagerstabil.

Bei den Vergleichsprodukten Paste 1 und Paste 2 kommt es dagegen sowohl bei 50 °C als auch bei Raumtemperatur zu einer deutlichen Abscheidung von klarer Flüssigkeit.

Beispiel 5 (Hydrophobierung von Kalksandstein)

Die erfindungsgemäßen Cremes 1 bis 4 und die nicht erfindungs-gemäßen Pasten 1 und 2 werden mit einem Pinsel auf Kalksandsteinplatten (ca. 10 x 10 x 2,5 cm$^3$) aufgetragen. Die Auftragsmenge beträgt ca. 300 g/m$^2$. Nach 14 Tagen Lagerung bei Raumtemperatur wird die Oberfläche der Prüfkörper optisch begutachtet, anschließend werden die Prüfkörper sowie nicht behandelte Referenzprüfkörper in Wasser gelegt (5 cm Wasserüberstand) und ihre Wasseraufnahme als relative Gewichtszunahme nach 24 Stunden bestimmt. Anschließend werden die Prüfkörper getrocknet, gebrochen und die Dicke der hydrophoben Zone (ist gleich der Eindringtiefe der hydrophobierenden Wirkstoffe) durch Auf tropfen von Wasser auf die Bruchfläche bestimmt. Durch Messen des Kontaktwinkels von aufgetropftem Wasser wird der Abperleffekt beurteilt. Kontaktwinkel von > 90 ° bezeichnen gute Hydrophobie, solche < 90 ° deuten auf Benetzung hin und stehen damit für eher schlechte Hydrophobie. Die Ergebnisse dieser Versuche sind in Tabelle I zusammengefaßt.

Tabelle I

| Produkt | Wasser- aufnahme | Eindring- tiefe | Abperl- effekt | Kontakt- winkel | Oberflächen- veränderung |
|---|---|---|---|---|---|
| Creme 1 | 0,9 % | > 10 mm | Gut | 110 ° | Keine |
| Creme 2 | 1,0 % | 6 - 8 mm | Gut | 115 ° | Keine |
| Creme 3 | 0,7 % | > 10 mm | Sehr gut | 130 ° | Keine |
| Creme 4 | 0,8 % | 5 - 7 mm | Sehr gut | 135 ° | Keine |
| Paste 1 | 1,2 % | > 10 mm | Schlecht | 30 ° | Braun, lehmartig |
| Paste 2 | 1,0 % | 3 - 6 mm | Sehr gut | 135 ° | Weißer Belag |
| unbehandelt | 12,3 % | - | - | - | - |

Wie aus Tabelle I hervorgeht, führen alle Produkte zu einer drastischen Reduzierung der kapillaren Wasseraufnahme. Mit Ausnahme von Paste 1 wird auch durchwegs ein guter Abperleffekt erhalten. Während die erfindungsgemäßen Cremes das Aussehen der Steine nicht verändern, kommt es mit den Vergleichspasten Paste 1 und Paste 2 zu deutlichen Veränderungen.

Beispiel 6 (Hydrophobierung von Tonziegeln)

Die erfindungsgemäßen Cremes 1 bis 4 und für Vergleichszwecke hergestellten Pasten 1 und 2 sowie Creme 5 werden mittels Pinsel in einer Auftragsmenge von ca. 500 g/m$^2$ auf Tonziegel (ca. 22 x 10 x 7 cm$^3$) aufgetragen. Nach 14 Tagen Trocknungszeit werden analog zu Beispiel 5 Wasseraufnahme, Abperleffekt bzw. Kontaktwinkel, Eindringtiefe und Oberflächenveränderung bestimmt. Die Ergebnisse dieser Untersuchungen sind in Tabelle II zusammengefaßt.

Tabelle II

| Produkt | Wasser- aufnahme | Eindring- tiefe | Abperl- effekt | Kontakt- winkel | Oberflächen- veränderung |
|---|---|---|---|---|---|
| Creme 1 | 0,5 % | > 50 mm | Gut | 110 ° | Keine |
| Creme 2 | 0,7 % | 22 - 28 mm | Gut | 115 ° | Keine |
| Creme 3 | 0,3 % | > 50 mm | Sehr gut | 125 ° | Leichte Farbvertiefung |
| Creme 4 | 0,6 % | 17 - 23 mm | Sehr gut | 135 ° | Keine |
| Paste 1 | 7,5 % | > 50 mm | Keiner | < 10 ° | Dunkel, lehmartig |
| Paste 2 | 2,3 % | 15 - 20 mm | gut | 110 ° | Weißer Belag |
| Creme 5 | 0,9 % | > 50 mm | Schlecht | < 30 ° | Keine |
| unbehandelt | 17,6 % | - | - | - | - |

Die erfindungsgemäßen Cremes zeigen alle eine hervorragende wasserabweisende Wirkung und führen mit Ausnahme von Creme 3 auch zu keiner Farbvertiefung. Die geringfügige Farbvertiefung von Creme 3 rührt vom hohen Wirkstoffgehalt dieser Creme bei gleichzeitig hohem Polysiloxangehalt her.
Die Vergleichspasten 1 und 2 verändern das Aussehen der Steine massiv. Da sie wasserfrei sind, dauert die Reaktion zum hydrophoben, polymeren Wirkstoff auf den nicht-alkalischen Ziegeln sehr lange, was dazu führt, daß erhebliche Mengen der flüchtigen Wirkstoffkomponente verdampfen. Bei dem silanreichen Produkt Paste 1 resultiert deshalb an der Oberfläche überhaupt kein Hydrophobieeffekt und auch die Wasseraufnahme ist unakzeptable hoch. Bei Paste 2 werden aufgrund des Polysiloxangehalts etwas bessere Ergebnisse erzielt.
Bei der 80 % Wirkstoff enthaltenden, lösemittelfreien und damit nicht erf.indungsgemäßen Creme 5 kommt es aufgrund von Emulgatoranreicherung und Wirkstoffverarmung an der Oberfläche zu einer an der Oberfläche schlecht ausgebildeten Hydrophobie, die sich insbesondere in einem unakzeptabel schlechten Abperleffekt äußert.

Beispiel 7 (Hydrophobierung von Beton)

Die erfindungsgemäßen Cremes 1 und 3 werden im Airless-Verfahren in einer Auftragsmenge von ca. 200 g/m$^2$ auf senkrecht aufgestellte Betonplatten (30 x 30 x 6 cm$^3$) der Betongüteklasse B 45 (Druckfestigkeit 45 N/mm$^2$) aufgesprüht. Die Cremes bilden dabei einen weißen Film auf der Betonoberfläche, der innerhalb von ca. 2 Stunden vollständig verschwindet. Zum Vergleich werden zwei weitere Betonplatten mit dünnflüssigen Imprägniermitteln besprüht, und zwar eine mit einer wäßrigen, 50 % Wirkstoff (n-Octyltriethoxysilan) enthaltenden Emulsion (Abkürzung EM50), die andere mit einer ebenfalls 50 % Wirkstoff (1 Gewichtsteil eines Polysiloxans der durchschnittlichen Formel $CH_3Si(OC_2H_5)_{0,8}O_{1,1}$ mit einer Viskosität von 20 mm$^2$/s, 4 Gewichtsteile iso-Octyltriethoxysilan) enthaltenden Lösung (Abkürzung LÖ50). Bei sattem Aufspühen wird mit dem wäßrigen Produkt EM50 eine maximale Produktaufnahme von ca. 65 g/m$^2$ erreicht, mit dem lösemittelhaltigen Produkt LÖ50 eine Aufnahmemenge von ca. 80 g/m$^2$. Höhere Auftragsmengen sind in einem Arbeitsgang nicht möglich.
Alle Prüfkörper wurden nach der Imprägnierung 14 Tage bei Raumtemperatur gelagert, dann wurde die Wasseraufnahme bei 7-tägiger Lagerung in Wasser (5 cm Wasserüberstand) bestimmt. Anschließend wurden die Probekörper gebrochen und die Wirkstoffeindringtiefe durch Auftropfen von Wasser gemessen. Tabelle III gibt die Ergebnisse wieder.

Tabelle III

| Produkt | Wasserauf- nahme | Eindring- tiefe | Oberflächenveränderung |
|---|---|---|---|
| Creme 1 | 0,08 % | 5 - 7 mm | Keine |

Tabelle III (fortgesetzt)

| Produkt | Wasserauf- nahme | Eindring- tiefe | Oberflächenveränderung |
|---|---|---|---|
| Creme 3 | 0,13 % | 3 - 5 mm | Leichte Farbvertiefung |
| EM50 | 0,67 % | 0,5 - 1 mm | Keine |
| LÖ50 | 0,46 % | 1 - 2 mm | Leichte Farbvertiefung |
| Unbehandelt | 1,21 % | - | |

Wie aus Tabelle III hervorgeht, reduzieren die beiden Cremes 1 und 3 die Wasseraufnahme des Betons aufgrund größerer Auftragsmengen und höherer Eindringtiefen wesentlich besser als die dünnflüssigen Produkte. Der Polysiloxangehalt in Creme 3 und LÖ50 führt auf dem dichten Beton zu einer leichten Farbvertiefung.

Beispiel 8 (Grundierung von Beton)

Auf Mörtelproben, die nach DIN EN 196 T1 (Wasser/Zement-Faktor 0,5) hergestellt und mindestens 90 Tage im Normklima (DIN 50014; 23 °C/50 % relative Luftfeuchtigkeit) gelagert worden sind, wurden mittels Pinsel je 250 g/ m$^2$ Creme 1 und zum Vergleich dieselbe Menge Paste 1 aufgetragen. Nach 7 Tagen Lagerung bei Raumtemperatur wurden die so behandelten Prüfkörper sowie unbehandelte Referenzproben mit einer Wurzelbürste abgebürstet und mit einer Dispersionsfarbe auf Acrylharzbasis (StoCryl® V 100, Sto AG, D-79780 Stühlingen) beschichtet. Nach Trocknung wurde die Haftzugfestigkeit der Farbe nach ISO 4624 bestimmt. Anschließend.wurden die Prüfkörper gebrochen und die Eindringtiefe des hydrophoben Wirkstoffs durch Auftröpfeln bestimmt (Tabelle IV).

Tabelle IV

| Produkt | Haftzugfestigkei | Eindringtiefe |
|---|---|---|
| Creme 1 | 2,7 N/mm$^2$ | 8 - 10 mm |
| Paste 1 | 0,6 N/mm$^2$ | 7 - 10 mm |
| Unbehandelt | 2,4 N/mm$^2$ | - |

Wie aus Tabelle IV hervorgeht, ist die Farbhaftung auf den mit Creme 1 grundierten Prüfkörpern sogar höher als auf den nicht imprägnierten. Bei Grundierung mit Paste 1 bleibt dagegen trotz Abbürsten soviel hydrophobierter Bentonit an der Probenoberfläche, daß die Farbhaftung drastisch reduziert wird. Paste 1 ist folglich für hydrophobierende Grundierung völlig ungeeignet.

Beispiel 9 (Creme mit Feststoff)

Analog zu Herstellung von **Creme 4** in Beispiel 3 werden 2 g Emulgator E2 mit 79,5 g Wasser, 2 g Komponente N2 und 0,5 g Essigsäure vermischt. Anschließend werden in diese Mischung in einer schnellaufenden Stator-Rotor-Rührvorrichtung 600 g Isoparaffin LM2 einemulgiert, wobei die so erhaltene Emulsion bereits erheblich eindickt. Nun werden in diese bereits steife Phase 77 g einer vorgefertigten Mischung aus 67 Gewichtsteilen Silan H1, 26 Gewichtsteilen Siliconharz H3 und 7 Gewichtsteilen eines mit Kieselsäure modifizierten Organopolysiloxans portionsweise einemulgiert. Zur Herstellung des mit Kieselsäure modifizierten Organopolysiloxans werden 200 g einer hochdispersen hydrophoben Kieselsäure (spezifische Oberfläche ca. 140 m$^2$/g) in 800 g Organopolysiloxan H2 gleichmäßig eingerührt. (→ **Creme 6**: 10 % Wirkstoff, incl. Kieselsäure).

Vergleichsbeispiel (Isemittelfreie Creme mit Feststoff)

2 g Emulgator E2 werden mit 79,5 g Wasser, 2 g Komponente N2 und 0,5 g Essigsäure vermischt. Anschließend werden in diese Mischung in einer schnellaufenden Stator-Rotor-Rührvorrichtung 414 g einer vorgefertigten Mischung aus 67 Gewichtsteilen Silan H1, 26 Gewichtsteilen Siliconharz H3 und 7 Gewichtsteilen eines mit Kieselsäure modifizierten Organopolysiloxans portionsweise einemulgiert. Zur Herstellung des mit Kieselsäure modifizierten

Organopolysiloxans werden 200 g einer hochdispersen hydrophoben Kieselsäure (spezifische Oberfläche ca. 140 m$^2$/g) in 800 g Organopolysiloxan H2 gleichmäßig eingerührt.
Überraschenderweise wird dabei keine Creme sondern nur eine dünnflüssige Emulsion erhalten.
Zum Vergleich wird der Versuch wiederholt mit der Abänderung, daß anstelle des mit Kieselsäure modifizierten Organopolysiloxans das ursprüngliche Organopolyiloxan H2 eingesetzt wird. Bei diesem Versuch wird ohne Probleme eine cremige Konsistenz erhalten.

Lösemittelfreie Cremes sind folglich in Gegenwart von hochdisperser hydrophober Kieselsäure nicht zugänglich bzw. nicht stabil.

Beispiel 10 (Frühwasserbeständigkeit)

Die erfindungsgemäßen Cremes 4 und 6 sowie die lösemittelfreie Vergleichscreme 5 werden mittels Pinsel in einer Auftragsmenge von ca. 500 g/m$^2$ auf Tonziegel (ca. 22 x 10 x 7 cm$^3$) aufgetragen. Nach 4 Stunden und nach 1 Tag Trocknungszeit bei Raumtemperatur wird auf die so behandelten Ziegel Wasser aufgetropft und das Benetzungsverhalten sowie das Assehen der Oberfläche qualitativ beurteilt (Tabelle V).

Tabelle V

| Produkt | Benetzungsverhalten | | Oberflächen-Veränderung |
|---|---|---|---|
| | nach 4 h | nach 24 h | |
| Creme 4 | Benetzt stark | Benetzt leicht | Keine |
| Creme 5 | Benetzt vollständig | Benetzt vollständig | Keine |
| Creme 6 | Guter Abperleffekt | Sehr guter Abperleffekt | keine |

Diese Ergebnisse bestätigen, daß sich die hydrophobe Kieselsäure von Creme 6 auf der Baustoffoberfläche anreichert und dort sofort nach Penetration des Cremefilms eine ausgeprägte Hydrophobie erzeugt. Bei den Cremes 4 und 5 dagegen ist es für die Ausbildung der Hydrophobie erforderlich, daß die Silan- bzw. Siloxankomponenten H1, H2 und H3 durch Reaktion mit Feuchtigkeit ein Siliconharznetzwerk ausbilden. Diese Reaktion dauert auf dem nicht alkalischen Tonziegel wesentlich länger als 24 Stunden.

**Patentansprüche**

1.   Wäßrige, standfeste Creme, welche die Komponenten

   (A), welche ausgewählt werden aus
   (A1) $C_1$-$C_{20}$-Alkyl-$C_2$-$C_6$-alkoxysilanen und
   (A2) Alkoxygruppen enthaltendem Organopolysiloxan,
   (C) Emulgator und
   (D) 1 bis 95 Gew.-% organisches Lösemittel enthält.

2.   Wäßrige, standfeste Creme nach Anspruch 1, welche zusätzlich Aminoalkylgruppen enhaltende Komponente (B) enthält, die ausgewählt wird aus Aminoalkylgruppen enhaltendem Alkoxysilan (B1) oder Organopolysiloxan (B2), das zusätzlich zu anderen Organosiloxaneinheiten solche Siloxaneinheiten enthält, die über SiC gebundene Reste mit basischem Stickstoff aufweisen, mit der Maßgabe, daß die Aminzahl des Organopolysiloxans (B2) mindestens 0,01 beträgt.

3.   Wäßrige, standfeste Creme nach Anspruch 1 oder 2, bei der die $C_1$-$C_{20}$-Alkyl-$C_2$-$C_6$-alkoxysilane (A1) 1 oder 2 gleiche oder verschiedene, gegebenenfalls halogensubstituierte, über SiC gebundene einwertige $C_1$-$C_{20}$-Alkylreste besitzen und die übrigen Reste sind gleiche oder verschiedene $C_2$-$C_6$-Alkoxyreste sind.

4.   Wäßrige, standfeste Creme nach Anspruch 1 bis 3, bei der die Organopolysiloxane (A2) aus Einheiten der allgemeinen Formel (I)

$$R_xSi(OR^1)_ySi(OH)_zO_{\frac{4-x-y-z}{2}} \tag{I},$$

bestehen, in der

R     gleiche oder verschiedene einwertige, gegebenenfalls halogensubstituierte, über SiC gebundene $C_1$-$C_{20}$-Kohlenwasserstoffreste,

$R^1$     gleiche oder verschiedene einwertige $C_1$-$C_6$-Alkylreste,

**x**     0, 1, 2 oder 3, durchschnittlich 0,8 bis 1,8,

**y**     0, 1, 2 oder 3, durchschnittlich 0,01 bis 2,0 und

**z**     0, 1, 2 oder 3, durchschnittlich 0,0 bis 0,5 bedeuten, mit der Maßgabe, daß die Summe von **x, y** und **z** höchstens 3,5 beträgt.

5.     Wäßrige, standfeste Creme nach Anspruch 2, bei der die Organopolysiloxane (B1) aufgebaut sind aus Einheiten der allgemeinen Formel (III)

$$R^2_a R^3_b (OR^4) SiO_{\frac{4-a-b-c}{2}} \qquad (III),$$

in der

$R^2$     gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$     gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$     gleich oder verschieden sein kann und Wasserstoffatom oder $C_1$-$C_6$-Alkylreste,

**a**     0, 1, 2 oder 3,

**b**     0, 1, 2 oder 3, durchschnittlich mindestens 0,05 und

**c**     0, 1, 2 oder 3 bedeuten,

    mit der Maßgabe, daß die Summe aus **a, b** und **c** kleiner oder gleich 3 ist und daß die Aminzahl des Organopolysiloxans (B2) mindestens 0,01 beträgt.

6.     Wäßrige, standfeste Creme nach Anspruch 2, bei der die Aminoalkylgruppen enhaltenden Alkoxysilane (B1) die allgemeine Formel (II)

$$R^2_u R^3_v Si(OR^4)_{4-u-v} \qquad (II),$$

aufweisen, in der $R^2$, $R^3$ und $R^4$ die bei der allgemeinen Formel (III) in Anspruch 5 aufgeführten Bedeutungen haben und

**u**     0, 1 oder 2 und

**v**     1, 2 oder 3 sind,

    mit der Maßgabe, daß die Summe aus **u** und **v** kleiner oder gleich 3 ist.

7.     Wäßrige, standfeste Creme nach Anspruch 1 bis 6, bei der als Emulgatoren (C) nichtionische Emulgatoren eingesetzt werden, die ausgewählt werden aus Alkylpolyglycolethern, Additionsprodukten von Alkylaminen mit Ethylenoxid oder Propylenoxid, Alkylpolyglykosiden und Polyvinylalkohol.

8.     Wäßrige, standfeste Creme nach Anspruch 1 bis 7, bei der das organische Lösemittel (D) ein nicht mit Wasser mischbares Lösemittel ist, das ausgewählt wird aus Alkanen, Benzinkohlenwasserstoffen, Isoparaffinen, längerkettige Alkoholen und Ethern.

9.     Wäßrige, standfeste Creme nach Anspruch 1 bis 8, welche als Zusatz hydrophobierte hochdisperse Kieselsäure (E) enthält.

10. Verfahren zur hydrophobierenden Imprägnierung oder Grundierung von mineralischen Baustoffen, bei dem die wäßrige, standfeste Creme nach Anspruch 1 bis 9 auf die mineralischen Baustoffe aufgetragen wird.

**Claims**

1. Aqueous, firm cream which contains the components

   (A), which are selected from
   (A1) $C_1$-$C_{20}$-alkyl-$C_2$-$C_6$-alkoxysilanes and
   (A2) organopolysiloxane containing alkoxy groups,
   (C) emulsifier and
   (D) 1 to 95% by weight of organic solvent.

2. Aqueous, firm cream according to Claim 1, which additionally contains component (B) which contains aminoalkyl groups and is selected from alkoxysilane (B1) containing aminoalkyl groups or organopolysiloxane (B2) which, in addition to other organosiloxane units, contain those siloxane units which have radicals bonded via SiC and having base nitrogen, with the proviso that the amine number of the organopolysiloxane (B2) is at least 0.01.

3. Aqueous, firm cream according to Claim 1 or 2, in which the $C_1$-$C_{20}$-alkyl-$C_2$-$C_6$-alkoxysilanes (A1) have 1 or 2 identical or different, optionally halogen-substituted, monovalent $C_1$-$C_{20}$-alkyl radicals bonded via SiC, and the remaining radicals are identical or different $C_2$-$C_6$-alkoxy radicals.

4. Aqueous, firm cream according to Claims 1 to 3, in which the organopolysiloxanes (A2) consist of units of the general formula (I)

$$R_x Si(OR^1)_y Si(OH) z O_{\frac{4-x-y-z}{2}} \qquad (I)$$

   in which

   **R**      denote identical or different monovalent, optionally halogen-substituted $C_1$-$C_{20}$-hydrocarbon radicals bonded via SiC,
   **$R^1$**      denote identical or different monovalent $C_1$-$C_6$-alkyl radicals,
   **x**      denotes 0, 1, 2 or 3, on average 0.8 to 1.8,
   **y**      denotes 0, 1, 2 or 3, on average 0.01 to 2.0, and
   **z**      denotes 0, 1, 2 or 3, on average 0.0 to 0.5, with the proviso that the sum of **x, y** and **z** is not more than 3.5.

5. Aqueous, firm cream according to Claim 2, in which the organopolysiloxanes (B1) are composed of units of the general formula (III)

$$R^2_a R^3_b (OR^4)_c Sio_{\frac{4-a-b-c}{2}} \qquad (III),$$

   in which

   **$R^2$**      denotes identical or different monovalent, optionally halogen-substituted. Sic-bonded $C_1$-$C_{20}$-hydrocarbon radicals free of basic nitrogen,
   **$R^3$**      denotes identical or different monovalent, optionally halogen-substituted SiC-bonded $C_1$-$C_{30}$-hydrocarbon radicals having basic nitrogen,
   **$R^4$**      may be identical or different and denotes a hydrogen atom or $C_1$-$C_6$-alkyl radicals,
   **a**      denotes 0, 1, 2 or 3,
   **b**      denotes 0, 1, 2 or 3, on average at least 0.05, and
   **c**      denotes 0, 1, 2 or 3,
        with the proviso that the sum of **a, b** and **c** is less than or equal to 3 and that the amine number of the organopolysiloxane (B2) is at least 0.01.

6. Aqueous, firm cream according to Claim 2, in which the alkoxysilanes (B1) containing aminoalkyl groups have the general formula (II)

$$R^2{}_uR^3{}_v Si(OR^4)_{4-u-v} \qquad \text{(II),}$$

in which **R²**, **R³** and **R⁴** have the meanings mentioned in the case of the general formula (III) in Claim 5 and
**u** is 0, 1 or 2 and
**v** is 1, 2 or 3,
with the proviso that the sum of **u** and **v** is less than or equal to 3.

7. Aqueous, firm cream according to Claims 1 to 6, in which the emulsifiers (C) used are nonionic emulsifiers which are selected from alkyl polyglycol ethers, adducts of alkylamines with ethylene oxide or propylene oxide, alkylpolyglycosides and polyvinyl alcohol.

8. Aqueous, firm cream according to Claims 1 to 7, in which the organic solvent (D) is a water-immiscible solvent which is selected from alkanes, petroleum hydrocarbons, isoparaffins, relatively long-chain alcohols and ethers.

9. Aqueous, firm cream according to Claims 1 to 8, which contains water-repellent finely divided silica (E) as an additive.

10. Process for impregnating or priming mineral building materials to impart water-repellency, in which the aqueous, firm cream according to Claims 1 to 9 is applied to the mineral building materials.

**Revendications**

1. Crème aqueuse stable qui contient les composants

    (A) qui sont choisis parmi
    (A1) des (alkyle en $C_1$ à $C_{20}$) (alcoxy en $C_2$ à $C_6$)silanes et
    (A2) un organopolysiloxane contenant des groupements alcoxy,
    (C) un émulsifiant et
    (D) 1 à 95% en poids de solvant organique.

2. Crème aqueuse stable selon la revendication 1, qui contient en outre un composant (B) contenant des groupements aminoalkyle, qui est choisi parmi un alcoxysilane (B1) ou un organopolysiloxane (B2) contenant des groupements aminoalkyle, qui contient, en plus d'autres unités organosiloxane, des unités siloxane qui présentent des radicaux contenant de l'azote basique, liés par SiC, à condition que l'indice d'amine de l'organopolysiloxane (B2) soit d'au moins 0,01.

3. Crème aqueuse stable selon la revendication 1 ou 2, dans laquelle les (alkyle en $C_1$ à $C_{20}$) (alcoxy en $C_2$ à $C_6$) silanes (A1) présentent 1 ou 2 radicaux alkyle en $C_1$ à $C_{20}$ identiques ou différents, monovalents, éventuellement substitués par halogène, liés par SiC et les autres radicaux sont des radicaux alcoxy en $C_2$ à $C_6$ identiques ou différents.

4. Crème aqueuse stable selon les revendications 1 à 3, dans laquelle les organopolysiloxanes (A2) sont ceux constitués d'unités de formule générale (I)

$$R_x Si(OR^1)_y Si(OH)_z O_{\frac{4-x-y-z}{2}}$$

dans laquelle
R signifie des radicaux hydrocarbonés en $C_1$ à $C_{20}$ identiques ou différents, monovalents, le cas échéant substitués par halogène, liés par SiC,
R1 signifie des radicaux alkyle en $C_1$- $C_6$, identiques ou différents, monovalents,

x signifie 0, 1, 2 ou 3, en moyenne 0,8 à 1,8,
y signifie 0, 1, 2 ou 3, en moyenne 0,01 à 2,0 et
z signifie 0, 1, 2 ou 3, en moyenne de 0,0 à 0,5, à condition que la somme de x, y et z soit d'au maximum 3,5.

**5.** Crème aqueuse stable selon la revendication 2, dans laquelle les organopolysiloxanes (B2) sont constitués d'unités de formule générale (III)

$$R^2_a R^3_b (OR^4)_c SiO_{\frac{4-a-b-c}{2}}$$

dans laquelle
R2 signifie des radicaux hydrocarbonés en $C_1$ à $C_{20}$ identiques ou différents, monovalents, exempts d'azote basique, le cas échéant substitués par halogène, liés par SiC,
R3 signifie des radicaux hydrocarbonés en $C_1$ à $C_{30}$ identiques ou différents, monovalents, le cas échéant substitués par halogène, présentant de l'azote basique, liés par SiC,
R4 peut être identique ou différent et signifie un atome d'hydrogène ou des radicaux alkyle en $C_1$ à $C_6$,
a signifie 0, 1, 2 ou 3
b signifie 0, 1, 2 ou 3, en moyenne au moins 0,05 et
c signifie 0, 1, 2 ou 3,
à condition que la somme de a, b et c soit inférieure ou égale à 3 et que l'indice d'amine de l'organopolysiloxane (B2) soit d'au moins 0,01.

**6.** Crème aqueuse stable selon la revendication 2, dans laquelle les alcoxysilanes (B1) contenant des groupements aminoalkyle présentent la formule générale (II)

$$R^2_u R^3_v Si(OR^4)_{4-u-v} \qquad \text{(II)}$$

dans laquelle R2, R3 et R4 présentent les significations indiquées pour la formule générale (III) dans la revendication 5 et
u représente 0, 1 ou 2 et
v représente 1, 2 ou 3
à condition que la somme de u et de v soit inférieure ou égale à 3.

**7.** Crème aqueuse stable selon les revendications 1 à 6, dans laquelle on utilise comme émulsifiants (C) des émulsifiants non ioniques, choisis parmi les alkylpolyglycoléthers, les produits d'addition d'alkylamines avec de l'oxyde d'éthylène ou de l'oxyde de propylène, les alkylpolyglycosides et un poly(alcool vinylique).

**8.** Crème aqueuse stable selon les revendications 1 à 7, dans laquelle le solvant organique (D) est un solvant non miscible avec de l'eau, qui est choisi parmi les alcanes, des hydrocarbures d'essence minérale, les isoparaffines, les alcools à longue chaîne et les éthers.

**9.** Crème aqueuse stable selon les revendications 1 à 8, qui contient comme additif de la silice hydrofugée, hautement dispersée (E).

**10.** Procédé pour hydrofuger des matériaux de construction minéraux par une imprégnation ou par une application d'une couche de fond, dans lequel on applique la crème aqueuse stable selon les revendications 1 à 9 sur les matériaux de construction minéraux.